(19) **Europäisches Patentamt / European Patent Office / Office européen des brevets**

(11) **EP 4 280 469 A1**

(12) **EUROPEAN PATENT APPLICATION**
published in accordance with Art. 153(4) EPC

(43) Date of publication:
**22.11.2023 Bulletin 2023/47**

(21) Application number: **21919142.6**

(22) Date of filing: **24.12.2021**

(51) International Patent Classification (IPC):
**H04B 7/0456** (2017.01)   **H04B 7/06** (2006.01)

(52) Cooperative Patent Classification (CPC):
**Y02D 30/70**

(86) International application number:
**PCT/CN2021/141203**

(87) International publication number:
**WO 2022/151955 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.01.2021  CN 202110048826**

(71) Applicant: **ZTE Corporation**
**Shenzhen, Guangdong  518057 (CN)**

(72) Inventors:
• **LI, Yong**
  **Shenzhen, Guangdong 518057 (CN)**
• **WU, Hao**
  **Shenzhen, Guangdong 518057 (CN)**
• **LU, Zhaohua**
  **Shenzhen, Guangdong 518057 (CN)**
• **ZHENG, Guozeng**
  **Shenzhen, Guangdong 518057 (CN)**

(74) Representative: **Aipex B.V.**
**Vestdijk 51**
**5611 CA Eindhoven (NL)**

(54) **CHANNEL STATE INFORMATION TRANSMISSION METHOD AND APPARATUS, ELECTRONIC DEVICE, AND STORAGE MEDIUM**

(57)    Provided are a channel state information transmission method and apparatus, an electronic device, and a storage medium. The channel state information transmission method includes determining configuration information, transmitting the configuration information to a terminal, and receiving channel state information which is reported according to the configuration information by the terminal. The configuration information includes at least one of the size of a subband, a channel state information reporting band, the number R of precoding matrix subbands contained in each subband, or report content of the channel state information. The report content of the channel state information includes a precoding matrix indicator (PMI).

**FIG. 1**

**Description**

TECHNICAL FIELD

The present application relates to the field of wireless communication, for example, a channel state information transmission method and apparatus, an electronic device, and a storage medium.

BACKGROUND

Wireless communication has developed into the 5th generation of communication technology. The Long-Term Evolution (LTE) technology in the 4th generation wireless communication technology and the New Radio (NR) technology in the fifth generation wireless communication technology are based on the orthogonal frequency-division multiplexing (OFDM) technology. In OFDM technology, the smallest frequency domain unit is a subcarrier, and the smallest time domain unit is an OFDM symbol. To facilitate the use of frequency domain resources, resource block is defined and a resource block is defined as a specific number of consecutive subcarriers; and moreover, bandwidth part (BWP) is defined and a bandwidth part (BWP) is defined as another specific number of continuous resource blocks on a carrier. To facilitate the use of time domain resources, slot is defined and a slot is defined as yet another specific number of consecutive OFDM symbols. The wireless communication system needs to acquire channel state information to improve resource utilization efficiency by utilizing the channel state information and also needs to save overhead and reduce the complexity of the system.

SUMMARY

The present application, by proposing a channel state information transmission method and apparatus, an electronic device, and a storage medium, aims to accurately acquire channel state information, improve resource utilization, and reduce system complexity.

Embodiments of the present application provide a channel state information transmission method. The method includes determining configuration information, transmitting the configuration information to a terminal, and receiving channel state information which is reported according to the configuration information by the terminal. The configuration information includes at least one of a size of a subband, a channel state information reporting band, the number R of precoding matrix subbands contained in each subband of a plurality of subbands, or report content of the channel state information. The report content of the channel state information includes a precoding matrix indicator (PMI).

Embodiments of the present application provide a channel state information transmission method. The method includes receiving configuration information sent by a base station, where the configuration information is determined by the base station, and reporting, according to the configuration information, channel state information to the base station. The configuration information includes at least one of a size of a subband, a channel state information reporting band, the number R of precoding matrix subbands contained in each subband of a plurality of subbands, or report content of the channel state information. The report content of the channel state information includes a precoding matrix indicator (PMI).

Embodiments of the present application provide a channel state information transmission apparatus. The apparatus includes an information determination module and a report receiving module. The information determination module is configured to determine configuration information and transmit the configuration information to a terminal. The configuration information includes at least one of a size of a subband, a channel state information reporting band, the number R of precoding matrix subbands contained in each subband of a plurality of subbands, or report content of the channel state information. The report receiving module is configured to receive channel state information which is reported according to the configuration information by the terminal. The report content of the channel state information includes a precoding matrix indicator (PMI).

Embodiments of the present application provide a channel state information transmission apparatus. The apparatus includes a configuration receiving module and a report sending module. The configuration receiving module is configured to receive configuration information sent by a base station, where the configuration information is determined by the base station. The report sending module is configured to report, according to the configuration information, channel state information to the base station. The configuration information includes at least one of the size of a subband, a channel state information reporting band, the number R of precoding matrix subbands contained in each subband, or report content of the channel state information. The report content of the channel state information includes a precoding matrix indicator (PMI).

Embodiments of the present application also provide a computer device. The computer device includes one or more processors and a memory. The memory is configured to store one or more programs. When executed by the one or more processors, the one or more programs cause the one or more processors to perform the channel state information transmission method described in any one of the embodiments of the present application.

Embodiments of the present application also provide a computer-readable storage medium storing a computer program which, when executed by a processor, causes the processor to perform the channel state information transmission method described in any one of the embodiments of the present application.

In this embodiment of the present application, the determined configuration information is transmitted to the terminal so that the channel state information which is reported according to the configuration information by the terminal is acquired. The configuration information may include at least one of the size of a subband, a channel state information reporting band, the number R of precoding matrix subbands contained in each subband, or report content of the channel state information. The report content of the channel state information includes a precoding matrix indicator. The terminal is instructed through the configuration information to feed back channel state information so that the accuracy of the channel state information can be improved, utilization efficiency of the channel can be enhanced, and communication quality can be improved.

BRIEF DESCRIPTION OF DRAWINGS

FIG. 1 is a flowchart of a channel state information transmission method according to an embodiment of the present application.

FIG. 2 is an example diagram of a channel state information transmission method according to an embodiment of the present application.

FIG. 3 is a flowchart of a channel state information transmission method according to an embodiment of the present application.

FIG. 4 is a diagram illustrating the structure of a channel state information transmission apparatus according to an embodiment of the present application.

FIG. 5 is a diagram illustrating the structure of a channel state information transmission apparatus according to an embodiment of the present application.

FIG. 6 is a diagram illustrating the structure of an electronic device according to an embodiment of the present application.

DETAILED DESCRIPTION

The embodiments described herein are merely intended to explain the present application.

Suffixes such as "module", "component", or "unit" used for indicating elements in the subsequent description are used merely for facilitating the description of the present application and have no particular meaning in themselves. Therefore, "module", "component", or "unit" may be used in a mixed manner.

The LTE technology in the 4th generation wireless communication technology and the NR technology in the fifth generation wireless communication technology are based on the OFDM technology. In OFDM technology, the smallest frequency domain unit is a subcarrier, and the smallest time domain unit is an OFDM symbol. To facilitate the use of frequency domain resources, resource block is defined and a resource block is defined as a specific number of consecutive subcarriers. Moreover, bandwidth part (BWP) is defined and a bandwidth part (BWP) is defined as another specific number of continuous resource blocks on a carrier. To facilitate the use of time domain resources, slot is defined and a slot is defined as yet another specific number of consecutive OFDM symbols.

A base station sends a reference signal. A terminal measures the reference signal, determines channel state information from the base station to the terminal, and reports the channel state information to the base station. The base station receives the channel state information reported by the terminal. The base station determines, according to the channel state represented by the received channel state information, a strategy for data transmission and transmits data, thereby improving the efficiency of data transmission. The accuracy of the channel state represented by the channel state information affects the transmission strategy of the base station, thereby affecting the efficiency of data transmission.

The reference signal sent by the base station to the terminal is a downlink reference signal. The downlink reference signal for channel state information reporting in an LTE system includes cell-specific reference signal (CRS) and channel state information reference signal (CSI-RS). The downlink reference signal for channel state information reporting in an NR system includes a channel state information reference signal (CSI-RS).

The content of the channel state information transmitted between the base station and the terminal includes a channel quality indicator (CQI) to indicate the quality of the channel or includes a precoding matrix indicator (PMI) to indicate a precoding matrix applied to the base station antenna. A type of CQI is reported in a manner of wideband CQI reporting, that is, a channel quality is reported for a channel state information reporting band (CSI reporting band), and the channel quality corresponds to the entire channel state information reporting band. Another type of CQI is reported in a manner of subband CQI reporting, that is, channel qualities are given in units of subbands for the channel state information reporting band (CSI reporting band), where one channel quality corresponds to one subband, that is, one channel quality is reported for each subband of the channel state information reporting band. The subband, a frequency domain unit, is defined as N consecutive resource blocks (RBs), where N is a positive integer. For ease of description, in the present application, the N consecutive resource blocks are referred to as the channel quality indicator subband, or CQI subband, or subband. N is referred to as the size of the CQI subband, or CQI subband size, or subband size. The bandwidth part (BWP) is divided into subbands. The channel state information reporting band (CSI reporting band) is defined by the subset of the subbands of the bandwidth part (BWP). The channel state information reporting band (CSI reporting band) is the band on which the channel state information needs to be reported.

In one method, the channel quality is determined according to the strength of the reference signal received by the terminal. In another method, the channel quality is determined according to the signal-to-interference-plus-noise ratio of the received reference signal. On the channel state information reporting band, reporting CQI in wideband CQI reporting can reduce resource overhead for CQI reporting if channel quality changes little; reporting CQI in subband CQI reporting can increase the accuracy of CQI reporting if the channel quality varies widely in the frequency domain.

One type of PMI is reported in a manner of wideband PMI reporting, namely, a PMI is reported for the channel state information reporting band (CSI reporting band), and the PMI corresponds to the entire channel state information reporting band. Another type of PMI is reported in a manner of subband PMI reporting, namely, a PMI is reported for each subband of the channel state information reporting band, or a component of a PMI is reported for each subband of the channel state information reporting band. For example, PMI is composed of X1 and X2. One method to report a component of a PMI for each subband of the channel state information reporting band is to report an X1 for the entire band and an X2 for each subband; another method is to report one X1 and one X2 for each subband.

Yet another type of PMI is reported as follows: the reported PMI indicates R precoding matrices for each subband, where R is a positive integer. In the sense of the frequency domain granularity for feeding back the precoding matrix, R also indicates the number of precoding matrix subbands included in each subband or the number of precoding matrix subbands included in each CQI subband.

(1) A wireless channel includes multipath components. Different paths have different delays, which are reflected in a phase rotation of different rates in the frequency domain so that the ratio between the channel coefficients of each antenna varies with the frequency. The precoding matrix indicated by the PMI acts on the transmitting antenna to match the channel coefficients of each antenna. Therefore, the more precoding matrices indicated by the PMI for each subband, the more accurate the channel state fed back can be improved, thereby improving the performance of the system. That is, increasing the value of R can improve the performance of the system. However, the value of R cannot be selected arbitrarily. Otherwise, the value is not supported by the system, channel state information cannot be acquired, data cannot be transmitted, and thereby the terminal and the base station may be caused to crash.

(2) One method to acquire a PMI is that the base station uses the CSI-RS to carry some vectors from which the terminal selects some vectors and feeds back coefficients of the corresponding vectors. For example, the base station transmits the CSI-RS subjected to some vector precoding, and the terminal, according to the measurement of the CSI-RS, feeds back the selected vectors and the coefficients corresponding to the selected vectors. One solution is to map a vector to a CSI-RS port, and the terminal feeds back selected CSI-RS ports and the coefficients corresponding to these CSI-RS ports, thereby enabling the selection and feedback of vectors corresponding to CSI-RS ports and of the coefficients corresponding to the vectors. The precoding matrix indicated by the feedback information of the terminal is a linear combination of the selected CSI-RS ports according to the corresponding coefficients. Alternatively, the precoding matrix indicated by the feedback information of the terminal is a linear combination of the selected vectors according to the corresponding coefficients. These vectors may be spatial domain vectors in which an element represents a weight coefficient for an antenna. A spatial domain vector is a vector representing channel angle information, for example, a DFT vector. A factor representing a phase change rate in a DFT vector corresponds to a channel angle. Another spatial domain vector is an eigenvector or singular vector of a channel coefficient matrix. One dimension of the channel coefficient matrix is a transmitting antenna dimension and another dimension is a receiving antenna dimension. These vectors may be frequency domain vectors in which an element represents a weight coefficient for a frequency domain unit. A frequency domain vector is a vector representing delay information, for example, a DFT vector. A factor representing a phase change rate in the DFT vector corresponds to a channel time delay. Another frequency domain vector is an eigenvector or singular vector of a channel coefficient matrix. One dimension of the channel coefficient matrix is a frequency domain unit dimension and another dimension is the receiving antenna dimension. These vectors may be two-dimensional vectors. A two-dimensional vector consists of two vectors, one of which is a vector of a first dimension and the other of which is a vector of a second dimension. A two-dimensional vector is also referred to as a vector pair. One vector in the vector pair is a vector of a first dimension, and the other vector in the vector pair is a vector of a second dimension. For example, a two-dimensional vector consists of two vectors. One of the two vectors is a vector of the spatial domain dimension, that is, a spatial domain vector. The other vector of the two vectors is a vector of the frequency domain dimension, that is, a frequency domain vector. To save the resource overhead occupied for transmitting the precoded CSI-RS, one solution is to map Q vectors to one CSI-RS port, where Q is a positive integer. The value of Q cannot be selected arbitrarily. Otherwise, the performance of the reported channel state is degraded, and the overhead of CSI-RS resources is increased.

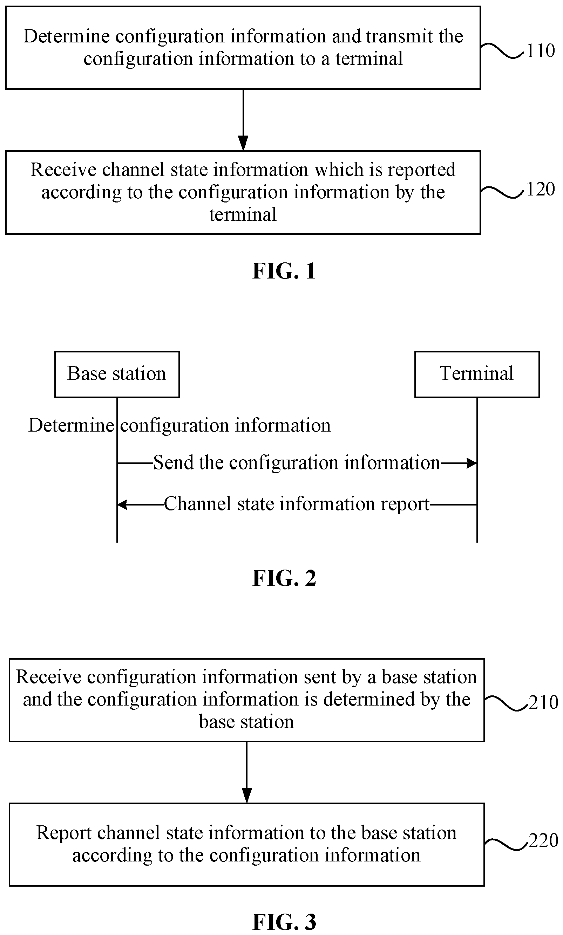

FIG. 1 is a flowchart of a channel state information transmission method according to an embodiment of the present application. This embodiment of the present application may be applied to the case of acquiring channel state information. The method can be performed by a channel state information transmission apparatus that may be implemented in software and/or hardware. Referring to FIG. 1, the method provided by this embodiment of the present application includes the following.

110: Configuration information is determined and transmitted to a terminal.

The configuration information may be a parameter for selecting report content of the channel state information, and the configuration information may be determined in the base station.

In this embodiment of the present application, the configuration information may be determined according to required report content of the channel state information, and the configuration information is transmitted to the terminal.

120: Channel state information which is reported according to the configuration information by the terminal is received. The configuration information includes at least one of the size of a subband, a channel state information reporting band, the number R of precoding matrix subbands contained in each subband, or report content of the channel state information. The report content of the channel state information includes a precoding matrix indicator (PMI).

After receiving the configuration information, the terminal may, according to the configuration information, detect the channel state information to form a report and send the report to the base station. The configuration information may include the size of a subband, a channel state information reporting band, the number R of precoding matrix subbands contained in each subband, or report content of the channel state information. The report content of the channel state information may include a precoding matrix indicator.

In this embodiment of the present application, the determined configuration information is transmitted to the terminal so that the channel state information which is reported according to the configuration information by the terminal is acquired. The configuration information may include at least one of the size of a subband, a channel state information reporting band, the number R of precoding matrix subbands contained in each subband, or report content of the channel state information. The report content of the channel state information includes a precoding matrix indicator. The terminal is instructed through the configuration information to feed back channel state information so that the accuracy of the channel state information can be improved, utilization efficiency of the channel can be enhanced, and communication quality can be improved.

Exemplarily, FIG. 2 is an example diagram of a channel state information transmission method according to an embodiment of the present application. Referring to FIG. 2, configuration information may be determined in a base station. The base station sends the configuration information to a terminal. After receiving the configuration information, the terminal may send a channel state information report to the base station. In this manner, the base station can acquire the channel state information.

On the basis of the preceding embodiment of the present application, the value of the number R of the precoding matrix subbands contained in the each subband is derived from a set of candidate values. Each element of multiple elements in the set of candidate values is a positive integer. The maximum value $R_{max}$ of the multiple elements in the set of candidate values is determined according to the channel state information reference signal (CSI-RS) density.

In this embodiment of the present application, the channel state information is transmitted in the form of a report, that is, in the form of a channel state information report. The maximum value $R_{max}$ of the multiple elements in the set of candidate values is determined according to the channel state information reference signal (CSI-RS) density, that is, according to the channel state information reference signal (CSI-RS) density associated with the channel state information report. The set of candidate values may be a positive integer range R, for example, $R \leq R_{max}$. For another example, $R = 1, 2, ... R_{max}$, or $R = 2, ... R_{max}$. $R_{max}$ denotes the maximum value of the elements in the set of candidate values. The channel state information reference signal (CSI-RS) density is measured by the average number of resource elements (REs) occupied by each CSI-RS port per resource block. The density is denoted as p. The magnitude of p represents the granularity of the frequency domain unit occupied by a complete CSI-RS port pattern. When the value of p is large, the granularity of the frequency domain unit occupied by the complete CSI-RS port pattern is small. When the value of p is small, the granularity of the frequency domain unit occupied by the complete CSI-RS port pattern is large. Only the frequency domain unit occupied by a complete CSI-RS port pattern can support the measurement and feedback of a precoding matrix. Therefore, it is helpful to ensure the correct measurement and feedback of the precoding matrix and improve performance that the maximum value $R_{max}$ of the elements in the set of candidate values is determined according to the density p of the channel state information reference signal (CSI-RS). A complete CSI-RS port pattern refers to a minimum resource pattern including all ports in a CSI-RS resource.

The maximum value $R_{max}$ in the set of candidate values is determined according to the density p of channel state information reference signal (CSI-RS) in the following manners.

For example, the density p of the CSI-RS is 1 and correspondingly, $R_{max}$ is 4, or the density p of the CSI-RS is 0.5 and correspondingly, $R_{max}$ is 2; or alternatively, corresponding to p being 1, $R_{max}$ is 4, corresponding to p being 0.5, $R_{max}$ is 2, or corresponding to p being 0.25, $R_{max}$ is 1.

For another example, corresponding to p being 1 and the size of the subband being 4, $R_{max}$ is 4. For example, corresponding to p being 1 and the size of the subband being 8, $R_{max}$ is 8. For example, corresponding to p being 1 and the size of the subband being 16, $R_{max}$ is 16. For example, corresponding to p being 1 and the size of the subband being 32, $R_{max}$ is 32.

Alternatively, corresponding to p being 0.5 and the size of the subband being 4, $R_{max}$ is 2. For example, corresponding to p being 0.5 and the size of the subband being 8, $R_{max}$ is 4. For example, corresponding to p being 1 and the size of the subband being 16, $R_{max}$ is 8. For example, corresponding to p being 1 and the size of the subband being 32, $R_{max}$ is 16.

For another example, corresponding to p being 1, the size of the subband is 4, and $R_{max}$ is 4; alternatively, corresponding to the size of the subband being 8, p is 8; alternatively, the size of the subband is 16, and $R_{max}$ is 16; alternatively, the size of the subband is 32, and $R_{max}$ is 32.

Corresponding to p being 0.5, the size of the subband is 4, and $R_{max}$ is 2; alternatively, corresponding to the size of the subband being 8, $R_{max}$ is 4; alternatively, the size of the subband is 16, and $R_{max}$ is 8; alternatively, the size of the subband is 32, and $R_{max}$ is 16.

Alternatively, corresponding to p being 0.25, the size of the subband is 4, and $R_{max}$ is 1; alternatively, corresponding to the size of the subband being 8, $R_{max}$ is 2; alternatively, the size of the subband is 16, and $R_{max}$ is 4; alternatively, the size of the subband is 32, and $R_{max}$ is 8.

On the basis of the preceding embodiments of the present application, the maximum value $R_{max}$ of the multiple elements in the set of candidate values and density p of the channel state information reference signal (CSI-RS) have a positive proportional relationship. The value of the $R_{max}$ increases as the value of the p increases, and the value of the $R_{max}$ decreases as the value of the p decreases.

For example, the density p of the CSI-RS is 1, and correspondingly, $R_{max}$ is 4. The density p of the CSI-RS is 0.5, and correspondingly, $R_{max}$ is 2. Alternatively, corresponding to p being 1, $R_{max}$ is 4. Corresponding to p being 0.5, $R_{max}$ is 2. Corresponding to p being 0.25, $R_{max}$ is 1.

For example, corresponding to p being 1, $R_{max}$ is 8. Corresponding to p being 0.5, $R_{max}$ is 4. Alternatively, corresponding to p being 1, $R_{max}$ is 8. Corresponding to p being 0.5, $R_{max}$ is 4. Corresponding to p being 0.25, $R_{max}$ is 2.

For example, corresponding to p being 1, $R_{max}$ is 4. Alternatively, corresponding to p being 0.5, $R_{max}$ is 2. Alternatively, corresponding to p being 0.25, $R_{max}$ is 1.

For example, corresponding to p being 1, $R_{max}$ is 8. Alternatively, corresponding to p being 0.5, $R_{max}$ is 4. Alternatively, corresponding to p being 0.25, $R_{max}$ is 2.

$R_{max}$ decreases as p decreases to increase the frequency domain granularity of precoding, and thus adequate support by the CSI-RS is obtained. In this manner, the process of correctly acquiring a precoding matrix is guaranteed. $R_{max}$ increases as p increases so that the frequency domain granularity of the precoding matrix can be reduced and adequate support by the CSI-RS is obtained, thereby improving the performance of the obtained precoding matrix.

On the basis of the preceding embodiments of the present application, the maximum value $R_{max}$ of the multiple elements in the set of candidate values is determined according to the size of the subband.

In an example embodiment, the maximum value $R_{max}$ of the multiple elements in the set of candidate values may be determined according to the size of the subband. The method is as follows:

For example, corresponding to the size of the subband being 4, the $R_{max}$ is 4; alternatively, corresponding to the size of the subband being 8, $R_{max}$ is 8; alternatively, corresponding to the size of the subband being 16, $R_{max}$ is 16; alternatively, corresponding to the size of the subband being 32, $R_{max}$ is 32.

For example, corresponding to the size of the subband being 4, the $R_{max}$ is 2; alternatively, corresponding to the size of the subband being 8, $R_{max}$ is 4; alternatively, corresponding to the size of the subband being 16, $R_{max}$ is 8; alternatively, corresponding to the size of the subband being 32, $R_{max}$ is 16.

For example, corresponding to the size of the subband being 4, the $R_{max}$ is 1; alternatively, corresponding to the size of the subband being 8, $R_{max}$ is 2; alternatively, corresponding to the size of the subband being 16, $R_{max}$ is 4; alternatively, corresponding to the size of the subband being 32, $R_{max}$ is 8.

The larger the size of the sub-band is, the greater the number of precoding matrices corresponding to one subband is, and the more accurate the feedback to the channel state is. Therefore, the maximum value $R_{max}$ of the multiple elements in the set of candidate values is determined according to the size of the subband, which provides a possibility for more accurate feedback of the channel state.

On the basis of the preceding embodiments of the present application, the maximum value $R_{max}$ of the multiple elements in the set of candidate values and the size of the subband have a positive proportional relationship. The value of the $R_{max}$ increases as the size of the subband increases, and the value of the $R_{max}$ decreases as the size of the subband decreases.

The value of $R_{max}$ may depend on the size of the subband. The larger the size of the subband is, the larger the value of $R_{max}$ may be.

On the basis of the preceding embodiments of the present application, the maximum value $R_{max}$ of the multiple elements in the set of candidate values is jointly determined according to the size of the subband and the number of CSI-RS ports.

Corresponding to the size of the subband being 4 and the number of CSI-RS ports being 8, the value of $R_{max}$ is 4. Corresponding to the size of the subband being 4 and the number of CSI-RS ports being 16, the value of $R_{max}$ is 2. Corresponding to the size of the subband being 4 and the number of CSI-RS ports being 32, the value of $R_{max}$ is 1. Corresponding to the size of the subband being 8 and the number of CSI-RS ports being 8, the value of $R_{max}$ is 8. Corresponding to the size of the subband being 8 and the number of CSI-RS ports being 16, the value of $R_{max}$ is 4. Corresponding to the size of the subband being 8 and the number of CSI-RS ports being 32, the value of $R_{max}$ is 2. Corresponding to the size of the subband being 16 and the number of CSI-RS ports being 8, the value of $R_{max}$ is 16. Corresponding to the size of the subband being 16 and the number of CSI-RS ports being 16, the value of $R_{max}$ is 8. Corresponding to the size of the subband being 16 and the number of CSI-RS ports being 32, the value of $R_{max}$ is 4. Corresponding to the size of the subband being 32 and the number of CSI-RS ports being 8, the value of $R_{max}$ is 32. Corresponding to the size of the subband being 32 and the number of CSI-RS ports being 16, the value of $R_{max}$ is 16. Corresponding to the size of the subband being 32 and the number of CSI-RS ports being 32, the value of $R_{max}$ is 8.

For example, corresponding to the size of the subband being 4 and the number of CSI-RS ports being less than or equal to 8, the value of $R_{max}$ is 4. Alternatively, corresponding to the size of the subband being 4 and the number of CSI-RS ports being 16, the value of $R_{max}$ is 2. Alternatively, corresponding to the size of the subband being 4 and the number of CSI-RS ports being 32, the value of $R_{max}$ is 1. Alternatively, corresponding to the size of the subband being 8 and the number of CSI-RS ports being 8, the value of $R_{max}$ is 8. Alternatively, corresponding to the size of the subband being 8 and the number of CSI-RS ports being 16, the value of $R_{max}$ is 4. Alternatively, corresponding to the size of the subband being 8 and the number of CSI-RS ports being 32, the value of $R_{max}$ is 2. Alternatively, corresponding to the size of the subband being 16 and the number of CSI-RS ports being 8, the value of $R_{max}$ is 16. Alternatively, corresponding to the size of the subband being 16 and the number of CSI-RS ports being 16, the value of $R_{max}$ is 8. Alternatively, corresponding to the size of the subband being 16 and the number of CSI-RS ports being 32, the value of $R_{max}$ is 4. Alternatively, corresponding to the size of the subband being 32 and the number of CSI-RS ports being 8, the value of $R_{max}$ is 32. Alternatively, corresponding to the size of the subband being 32 and the number of CSI-RS ports being 16, the value of $R_{max}$ is 16. Alternatively, corresponding to the size of the subband being 32 and the number of CSI-RS ports being 32, the value of $R_{max}$ is 8.

An increase in the number of CSI-RS ports causes the increase of the overhead for a CSI-RS resource. The maximum value $R_{max}$ is jointly determined according to the size of the subband and the number of CSI-RS ports, so that it is possible to reduce the overhead of the CSI-RS resource and maintain the performance of the precoding matrix.

On the basis of the preceding embodiments of the present application, the maximum value $R_{max}$ of the multiple elements in the set of candidate values is jointly determined according to the size of the subband and the density p of the channel state information reference signal (CSI-RS).

In an example embodiment, corresponding to the size of the subband being 4 and the number of CSI-RS ports being 8, the value of $R_{max}$ is 4. Corresponding to the size of the subband being 4 and the number of CSI-RS ports being 16, the value of $R_{max}$ is 2. Corresponding to the size of the subband being 4 and the number of CSI-RS ports being 32, the value of $R_{max}$ is 1. Corresponding to the size of the subband being 8 and the number of CSI-RS ports being 8, the value of $R_{max}$ is 8. Corresponding to the size of the subband being 8 and the number of CSI-RS ports being 16, the value of $R_{max}$ is 4. Corresponding to the size of the subband being 8 and the number of CSI-RS ports being 32, the value of $R_{max}$ is 2. Corresponding to the size of the subband being 16 and the number of CSI-RS ports being 8, the value of $R_{max}$ is 16. Corresponding to the size of the subband being 16 and the number of CSI-RS ports being 16, the value of $R_{max}$ is 8. Corresponding to the size of the subband being 16 and the number of CSI-RS ports being 32, the value of $R_{max}$ is 4. Corresponding to the size of the subband being 32 and the number of CSI-RS ports being 8, the value of $R_{max}$ is 32. Corresponding to the size of the subband being 32 and the number of CSI-RS ports being 16, the value of $R_{max}$ is 16. Corresponding to the size of the subband being 32 and the number of CSI-RS ports being 32, the value of $R_{max}$ is 8.

For example, corresponding to the size of the subband being 4 and the number of CSI-RS ports being less than or equal to 8, the value of $R_{max}$ is 4. Alternatively, corresponding to the size of the subband being 4 and the number of CSI-RS ports being 16, the value of $R_{max}$ is 2. Alternatively, corresponding to the size of the subband being 4 and the number of CSI-RS ports being 32, the value of $R_{max}$ is 1. Alternatively, corresponding to the size of the subband being 8 and the number of CSI-RS ports being 8, the value of $R_{max}$ is 8. Alternatively, corresponding to the size of the subband being 8 and the number of CSI-RS ports being 16, the value of $R_{max}$ is 4. Alternatively, corresponding to the size of the subband being 8 and the number of CSI-RS ports being 32, the value of $R_{max}$ is 2. Alternatively, corresponding to the size of the subband being 16 and the number of CSI-RS ports being 8, the value of $R_{max}$ is 16. Alternatively, corresponding to the size of the subband being 16 and the number of CSI-RS ports being 16, the value of $R_{max}$ is 8. Alternatively, corresponding to the size of the subband being 16 and the number of CSI-RS ports being 32, the value of $R_{max}$ is 4. Alternatively, corresponding to the size of the subband being 32 and the number of CSI-RS ports being 8, the value of $R_{max}$ is 32. Alternatively, corresponding to the size of the subband being 32 and the number of CSI-RS ports being 16, the value of $R_{max}$ is 16. Alternatively, corresponding to the size of the subband being 32 and the number of CSI-RS ports being 32, the value of $R_{max}$ is 8.

An increase in the number of CSI-RS ports increases the overhead for a CSI-RS resource. The maximum value $R_{max}$ is jointly determined according to the size of the subband and the number of CSI-RS ports, so that it is possible to reduce the overhead of the CSI-RS resource and maintain the performance of the precoding matrix.

On the basis of the preceding embodiments of the present application, the maximum value $R_{max}$ of the multiple elements in the set of candidate values is jointly determined according to the size of the subband and the density p of the channel state information reference signal (CSI-RS).

In this embodiment of the present application, the value of $R_{max}$ may be jointly determined by the size of the subband and the density p of the CSI-RS. For example, corresponding to p being 1 and the size of the subband being 4, $R_{max}$ is 4; corresponding to p being 1 and the size of the subband being 8, $R_{max}$ is 8; corresponding to p being 1 and the size of the subband being 16, $R_{max}$ is 16; corresponding to p being 1 and the size of the subband being 32, $R_{max}$ is 32; corresponding to p being 0.5 and the size of the subband being 4, $R_{max}$ is 2; corresponding to p being 0.5 and the size of the subband being 8, $R_{max}$ is 4; corresponding to p being 1 and the size of the subband being 16, $R_{max}$ is 8; corresponding to p being 1 and the size of the subband being 32, $R_{max}$ is 16.

For another example, corresponding to p being 1, the size of the subband is 4, and $R_{max}$ is 4; alternatively, corresponding to the size of the subband being 8, $R_{max}$ is 8; alternatively, the size of the subband is 16, and p is 16; alternatively, the size of the subband is 32, and $R_{max}$ is 32.

Corresponding to p being 0.5, the size of the subband is 4, and $R_{max}$ is 2; alternatively, corresponding to the size of the subband being 8, $R_{max}$ is 4; alternatively, the size of the subband is 16, and $R_{max}$ is 8; alternatively, the size of the subband is 32, and $R_{max}$ is 16.

Alternatively, corresponding to p being 0.25, the size of the subband is 4, and $R_{max}$ is 1; alternatively, corresponding to the size of the subband being 8, $R_{max}$ is 2; alternatively, the size of the subband is 16, and $R_{max}$ is 4; alternatively, the size of the subband is 32, and $R_{max}$ is 8.

The maximum value $R_{max}$ is jointly determined according to the size of the subband and the channel state information reference signal (CSI-RS) density so that not only the overhead of the CSI-RS can be reduced and one subband is added to provide the number of precoding matrices, but also the number of combinations of the p, the size of the subband, and the maximum value $R_{max}$ that the system needs to support can be reduced, thereby reducing the complexity of the system.

On the basis of the preceding embodiments of the present application, the maximum value $R_{max}$ of the multiple elements in the set of candidate values is determined according to the product of the size of the subband and the density p of the channel state information reference signal (CSI-RS).

$R_{max}$ = the size of the subband*p, or $R_{max}$ = C* the size of the subband*p. C may be a constant. The value of C may be an element in the set [1/2"], where n = 0, 1, 2, 3, ...

On the basis of the preceding embodiments of the present application, the p is 1, and correspondingly, the $R_{max}$ is the size of the subband; and the P is 0.5, and correspondingly, the $R_{max}$ is half the size of the subband.

$R_{max}$ may be associated with p. p is 1, and correspondingly, $R_{max}$ is the size of the subband. P is 0.5, and $R_{max}$ = the size of the subband*0.5. p is 0.25, and $R_{max}$ = the size of the subband*0.25.

On the basis of the preceding embodiments of the present application, the value of each element of the multiple elements in the set of candidate values is 2 to the power of i. i is an integer. The maximum value of i is determined by the size of the subband and the density p of the channel state information reference signal (CSI-RS).

In the set of candidate values, $R = 2^i$, where i = 0, 1, ... $\log_2$ (the size of the subband*p). $\text{Log}_2()$ denotes the logarithm of the base 2.

$$R = 2^i \begin{cases} i = 0, 1, \ldots, \log_2(\text{the size of the subband}); \ p = 1 \\ i = 0, 1, \ldots, \log_2(\text{the size of the subband}) - 1; \ p = 0.5 \end{cases}$$

For another example, . That is, p is 1, and correspondingly, $R = 2^i$, where $i = 0, 1, \ldots \log_2$ (the size of the subband), or p is 0.5, and $R = 2'$, where $i = 0, 1, \ldots \log_2$ (the size of the subband) - 1.

For another example, p is 1, and correspondingly, $R = 2^i$, where $i = 0, 1, \ldots \log_2$ (the size of the subband), or p is 0.5, and correspondingly, $R = 2^i$, where $i = 0, 1, \ldots \log_2$ (the size of the subband) - 1; p is 0.25, and correspondingly, $i = 0, 1, \ldots \log_2$ (the size of the subband) - 2.

On the basis of the preceding embodiments of the present application, the configuration information also includes the mapping relation of vectors of Q times the number M of CSI-RS ports mapped to a CSI-RS resource, where Q is a positive integer.

The configuration information also includes vectors of a positive integer times the number M of CSI-RS ports mapped to the CSI-RS resource. The value of Q may be 1, or 2, or 3, or 4.

On the basis of the preceding embodiments of the present application, the value of Q is derived from a set of candidate values, and the maximum value of multiple elements in the set of candidate values is determined by the size of the subband.

The maximum value of elements in the set of candidate values of Q is denoted as Qmax. Qmax is determined by the size of the subband. The determination method may be the following: For example, Qmax equals the size of the subband; alternatively, Qmax equals the product of the size of the subband and the density p of the channel state information reference signal (CSI-RS). For another example, Qmax is less than or equal to the size of the subband; alternatively, Qmax is less than or equal to the product of the size of the subband and the density p of the channel state information reference signal (CSI-RS). For another example, Qmax is a divisor of the size of the subband; alternatively, Qmax is a divisor of the product of the size of the subband and the density p of the channel state information reference signal (CSI-RS). For another example, the elements in the set of candidate values of Q are a subset of the set formed by divisors of the size of the subband; alternatively, the elements in the set of candidate values of Q is are a subset of the set formed by divisors of the product of the size of the subband and the density p of the channel state information reference signal (CSI-RS). Alternatively, the product of Q and R equals the product of the size of the subband and the density p of the channel state information reference signal (CSI-RS).

On the basis of the preceding embodiments of the present application, the value of Q is derived from a set of candidate values in which each element of multiple elements is an integer power of 2.

For example, the set of candidate values of Q is $2^i$, where i belongs to a set of integers.

On the basis of the preceding embodiments of the present application, mapping the vectors of the Q times the number M of the CSI-RS ports to the CSI-RS resource includes the steps described below. A subband of the multiple subbands is divided into Q groups and consecutive P resource blocks form one group. Q*M vectors are divided into Q vector groups and each vector group of the Q vector groups includes M vectors. Each vector group of the Q vector groups is mapped to a respective one resource block group of the Q groups in a one-to-one manner.

In this embodiment of the present application, the mapping method of the vectors and the CSI-RS resource may be the following: separately grouping first and then mapping in a one-to-one manner. For example, Q is 4, one subband is divided into four groups, and 2 consecutive resource blocks form one group. The four groups are the first group, the second group, the third group, and the fourth group. M is 8, 32 vectors are divided into 4 groups, namely, the first group, the second group, the third group, and the fourth group, and each group includes 8 vectors. The first group of vectors is mapped to the first group of resource blocks. The second group of vectors is mapped to the second group of resource blocks. The third group of vectors is mapped to the third group of resource blocks. The fourth group of vectors is mapped to the fourth group of resource blocks.

On the basis of the preceding embodiments of the present application, multiple sequence numbers of the Q*M vectors are in ascending order according to multiple resource block groups from low frequency to high frequency.

When the vectors and the resources are grouped, a sequence number of a vector mapped to a low-frequency resource block is smaller than a sequence number of a vector mapped to a highfrequency resource block after the vector groups are mapped to the resource blocks. For example, when the frequency of the resource block group 1, resource block group 2, resource block group 3, and resource block group 4 is from low to high, the sequence number of the vector mapped to the resource block group 2 is larger than the sequence number of the vector mapped to the resource block group 1, the sequence number of the vector mapped to the resource block group 3 is larger than the sequence number of the vector mapped to the resource block group 2, and the sequence number of the vector mapped to the resource block group 4 is larger than the sequence number of the vector mapped to the resource block group 3.

The terminal reports the selected vector to the base station, and therefore the vectors mapped to the CSI-RS resource should have sequence numbers for identification. The sequence numbers of the vectors are in ascending order according to multiple resource block groups from low frequency to high frequency, which is helpful to reduce the complexity of the system.

On the basis of the preceding embodiments of the present application, multiple resource block groups of a first subband of a bandwidth part are mapped, from high frequency to low frequency, to multiple vector groups in sequence in descending order from the largest sequence number of the multiple vector groups.

On the basis of the preceding embodiments of the present application, multiple resource block groups of a last subband of a bandwidth part are mapped, from low frequency to high frequency, to multiple vector groups in sequence in ascending order from a smallest sequence number of the multiple vector groups.

On the basis of the preceding embodiments of the present application, a resource block group of multiple resource block groups of a first subband of a bandwidth part is mapped to a vector group with a smallest sequence number of multiple vector groups.

On the basis of the preceding embodiments of the present application, mapping the vectors of the Q times the number M of the CSI-RS ports to the CSI-RS resource includes the steps described below. Multiple resource blocks in the channel state information reporting band are divided into Q groups. Sequence numbers of the multiple resource blocks in the channel state information reporting band are serially determined in ascending order from low frequency to high frequency. A sequence number of a resource block is denoted as k, a remainder of k divided by Q is denoted as k', and a resource block group to which the resource block belongs is determined according to the remainder k'. Q*M vectors are divided into Q groups. Each vector group of the Q groups includes M vectors. A vector group is mapped to a resource block group in a one-to-one manner.

In this embodiment of the present application, the resource blocks of the band may be divided into Q groups, and each resource block is identified with a sequence number in order from low frequency to high frequency. The resource blocks are grouped according to the sequence number and the remainder of Q. The resource blocks in each group have the same remainder of the sequence number. The vectors are divided into Q groups. Each vector group is mapped to each resource block group in a one-to-one manner. For example, the remainder k' is used as the sequence number of a resource block group to which the resource blocks belong. For another example, the sum of the remainder k' and an integer is used as the sequence number of a resource block group to which the resource blocks belong. For another example, k' is used as the sequence number of the resource block group to which k' belongs.

On the basis of the preceding embodiments of the present application, multiple sequence numbers of the Q*M vectors are in ascending order according to an order of a remainder k' of a sequence number of a resource block of the multiple resource blocks from low to high.

The sequence numbers of vectors gradually are in ascending order according to the order of the remainder k' of the sequence number of a resource block from low to high. For example, the sequence number of a vector mapped to a resource block with a remainder of 1 is larger than the sequence number of a vector mapped to a resource block with a remainder of 0. For another example, the sequence number of a vector mapped to a resource block with a remainder of 2 is greater than the sequence number of a vector mapped to the resource block with a remainder of 1.

On the basis of the preceding embodiments of the present application, mapping the vectors of the Q times the number M of the CSI-RS ports to the CSI-RS resource includes the steps described below. Multiple resource blocks in the channel state information reporting band are divided into Q + K groups, where K is an integer greater than or equal to zero. The sequence number of a resource block group of the Q + K groups is denoted as u, and a remainder of u divided by Q is denoted as u'. Q*M vectors are divided into Q groups. Each vector group of the Q groups includes M vectors. Each vector group of the Q groups is mapped to a resource block group with a corresponding remainder of the Q + K groups in a manner in which a vector group corresponds to a remainder according to a remainder u' of a sequence number of a resource block group of the Q + K groups.

The resource blocks may be divided into Q + K groups, where K may be an integer greater than or equal to zero. The resource blocks are grouped by taking the remainder of the resource block sequence number u and Q. The vectors are divided into Q groups. Vectors in each group are mapped to resource blocks with the same remainder. For example, resource block groups with the same remainder are mapped to by the same vector groups. In this manner, the number of times where a part of the vector groups are mapped by the CSI-RS resource can be increased, thereby improving the measurement performance of this part of the vector groups and meanwhile, saving the overhead of the CSI-RS resource.

On the basis of the preceding embodiments of the present application, the precoding matrix indicator (PMI) includes L first vectors and S second vectors. The L first vectors represent a selection of a CSI-RS port or a selection of a vector mapped by a CSI-RS resource. The S second vectors are frequency domain vectors and discrete Fourier transform DFT vectors. The configuration information indicates the value of L and the value of S. The sequence number of a DFT vector is determined according to the value of S.

In an example embodiment, corresponding to S being 1, the sequence number of the DFT vector is 0.

For example, corresponding to S being 2, the sequence number of the DFT vector is -1, 0 or 0, 1.

For example, corresponding to S being 3, the sequence number of the DFT vector is -1, 0, 1 or - 1, 0, 1.

For example, corresponding to S being 4, the sequence number of the DFT vector is -2, -1, 0, 1, or -1, 0, 1, 2.

For example, corresponding to S being 5, the sequence number of the DFT vector is -2, -1, 0, 1, 2, or -2, -1, 0, 1, 2.

For example, corresponding to S being 6, the sequence number of the DFT vector is -3, -2, -1, 0, 1, 2, or -2, -1, 0, 1, 2, 3.

For example, corresponding to S being 7, the sequence number of the DFT vector is -3, -2, - 1, 0, 1, 2, 3, or -3, -2, -1, 0, 1, 2, 3.

Other examples are described below.

For example, corresponding to S being 1, the sequence number of the DFT vector is 0.

For example, corresponding to S being 2, the sequence number of the DFT vector is 0, 1.

For example, corresponding to S being 3, the sequence number of the DFT vector is 0, 1, 2.

For example, corresponding to S being 4, the sequence number of the DFT vector is 0, 1, 2, 3.

For example, corresponding to S being 5, the sequence number of the DFT vector is 0, 1, 2, 3, 4.

For example, corresponding to S being 6, the sequence number of the DFT vector is 0, 1, 2, 3, 4, 5.

For example, corresponding to S being 7, the sequence number of the DFT vector is 0, 1, 2, 3, 4, 5, 6.

On the basis of the preceding embodiments of the present application, the precoding matrix indicator (PMI) includes L first vectors and S second vectors. The L first vectors represent a selection of a CSI-RS port or a selection of a vector mapped by a CSI-RS resource. The S second vectors are frequency domain vectors and discrete Fourier transform DFT vectors. The configuration information indicates the value of L. The value of S is determined according to L or the number of CSI-RS ports.

The precoding matrix indicator (PMI) in the configuration information includes L first vectors and S second vectors. The value of L represents a selection of a CSI-RS port or a vector mapped by a CSI-RS resource. The value of S may be determined by L or the number of CSI-RS ports. For example, the smaller the number of CSI-RS ports is, the larger the value of S is. For another example, the larger the value of L is, the larger the value of S is. For another example, the value of S is determined according to the ratio of L to the number of CSI-RS ports. For example, the smaller the ratio is, the smaller the value of S is; alternatively, the larger the ratio is, the larger the value of S is; alternatively, the smaller the ratio is, the larger the value of S is; alternatively, the larger the ratio is, the smaller the value of S is.

FIG. 3 is a flowchart of a channel state information transmission method according to an embodiment of the present application. This embodiment of the present application may be applied to acquiring channel state information. The method may be performed by a channel state information transmission apparatus that may be implemented in software and/or hardware. Referring to FIG. 3, the method provided by this embodiment of the present application includes the following.

210: Configuration information sent by a base station is received, and the configuration information is determined by the base station.

220: Channel state information is reported to the base station according to the configuration information. The configuration information includes at least one of a size of a subband, a channel state information reporting band, the number R of precoding matrix subbands contained in each subband of multiple subbands, or report content of the channel state information. The report content of the channel state information includes a precoding matrix indicator (PMI).

In this embodiment of the present application, the configuration information determined by the base station is acquired via the terminal, and the channel state information is reported to the base station according to the configuration information. The configuration information may include at least one of the size of a subband, a channel state information reporting band, the number R of precoding matrix subbands contained in each subband, or report content of the channel state information. The report content of the channel state information includes a precoding matrix indicator. The terminal is instructed through the configuration information to feed back channel state information so that the accuracy of the channel state information can be improved, utilization efficiency of the channel can be enhanced, and communication quality can be improved.

On the basis of the preceding embodiment of the present application, the value of the number R of the precoding matrix subbands contained in the each subband in the configuration information is derived from a set of candidate values. An element of multiple elements in the set of candidate values is a positive integer. The maximum value $R_{max}$ of the multiple elements in the set of candidate values is determined according to the channel state information reference signal (CSI-RS) density.

On the basis of the preceding embodiments of the present application, the maximum value $R_{max}$ of the multiple elements in the set of candidate values and density p of the channel state information reference signal (CSI-RS) have a positive proportional relationship. The value of the $R_{max}$ increases as the value of the p increases, and the value of the $R_{max}$ decreases as the value of the p decreases.

On the basis of the preceding embodiments of the present application, the maximum value $R_{max}$ of the multiple elements in the set of candidate values is determined according to the size of the subband.

On the basis of the preceding embodiments of the present application, the maximum value $R_{max}$ of the multiple elements in the set of candidate values and the size of the subband have a positive proportional relationship. The value of the $R_{max}$ increases as the size of the subband increases, and the value of the $R_{max}$ decreases as the size of the subband decreases.

On the basis of the preceding embodiments of the present application, the maximum value $R_{max}$ of the multiple elements in the set of candidate values is jointly determined according to the size of the subband and the number of CSI-RS ports.

On the basis of the preceding embodiments of the present application, the maximum value $R_{max}$ of the multiple elements in the set of candidate values is jointly determined according to the size of the subband and the density p of the channel state information reference signal (CSI-RS).

On the basis of the preceding embodiments of the present application, the maximum value $R_{max}$ of the multiple elements in the set of candidate values is jointly determined according to the size of the subband and the density p of the channel state information reference signal (CSI-RS).

On the basis of the preceding embodiments of the present application, the maximum value $R_{max}$ of the multiple elements in the set of candidate values is determined according to the product of the size of the subband and the density p of the channel state information reference signal (CSI-RS).

On the basis of the preceding embodiments of the present application, the p is 1, and correspondingly, the $R_{max}$ is the size of the subband; and the P is 0.5, and correspondingly, the $R_{max}$ is half the size of the subband.

On the basis of the preceding embodiments of the present application, the value of an element of the multiple elements in the set of candidate values is 2 to the power of i. i is an integer. The maximum value of i is determined by the size of the subband and the density p of the channel state information reference signal (CSI-RS).

On the basis of the preceding embodiments of the present application, the configuration information also includes the mapping relation of vectors of Q times the number M of CSI-RS ports mapped to a CSI-RS resource, where Q is a positive integer.

On the basis of the preceding embodiments of the present application, the value of Q is derived from a set of candidate values, and the maximum value of multiple elements in the set of candidate values is determined by the size of the subband.

On the basis of the preceding embodiments of the present application, the value of Q is derived from a set of candidate values in which an element of multiple elements is an integer power of 2.

On the basis of the preceding embodiments of the present application, mapping the vectors of the Q times the number M of the CSI-RS ports to the CSI-RS resource includes the steps described below. A subband of the multiple subbands is divided into Q groups and consecutive P resource blocks form one group. Q*M vectors are divided into Q vector groups and each vector group of the Q vector groups includes M vectors. A vector group of the Q vector groups is mapped to a resource block group of the Q groups in a one-to-one manner.

On the basis of the preceding embodiments of the present application, multiple sequence numbers of the Q*M vectors are in ascending order according to multiple resource block groups from low frequency to high frequency.

On the basis of the preceding embodiments of the present application, multiple resource block groups of a first subband of a bandwidth part are mapped, from high frequency to low frequency, to multiple vector groups in sequence in descending order from the largest sequence number of the multiple vector groups.

On the basis of the preceding embodiments of the present application, multiple resource block groups of a last subband of a bandwidth part are mapped, from low frequency to high frequency, to multiple vector groups in sequence in ascending order from a smallest sequence number of the multiple vector groups.

On the basis of the preceding embodiments of the present application, a resource block group of multiple resource block groups of a first subband of a bandwidth part is mapped to a vector group with a smallest sequence number of multiple vector groups.

On the basis of the preceding embodiments of the present application, mapping the vectors of the Q times the number M of the CSI-RS ports to the CSI-RS resource includes the steps described below. Multiple resource blocks in the channel state information reporting band are divided into Q groups. Sequence numbers of the multiple resource blocks in the channel state information reporting band are serially determined in ascending order from low frequency to high frequency. A sequence number of a resource block is denoted as k, a remainder of k divided by Q is denoted as k', and a resource block group to which the resource block belongs is determined according to the remainder k'. Q*M vectors are divided into Q groups. Each vector group of the Q groups includes M vectors. A vector group is mapped to a resource block group in a one-to-one manner.

On the basis of the preceding embodiments of the present application, multiple sequence numbers of the Q*M vectors increases are in ascending order according to remainders k' of the multiple resource blocks from low to high.

On the basis of the preceding embodiments of the present application, mapping the vectors of the Q times the number M of the CSI-RS ports to the CSI-RS resource includes the steps described below. Multiple resource blocks in the channel state information reporting band are divided into Q + K groups, where K is an integer greater than or equal to zero. The sequence number of a resource block group of the Q + K groups is denoted as u, and a remainder of u divided by Q is denoted as u'. Q*M vectors are divided into Q groups. Each vector group of the Q groups includes M vectors. Each vector group of the Q groups is mapped to a resource block group with a corresponding remainder of the Q + K groups in a manner in which a vector group corresponds to a remainder according to a remainder u' of a sequence number of a resource block group of the Q + K groups.

On the basis of the preceding embodiments of the present application, the precoding matrix indicator (PMI) includes L first vectors and S second vectors. The L first vectors represent a selection of a CSI-RS port or a selection of a vector mapped by a CSI-RS resource. The S second vectors are frequency domain vectors and discrete Fourier transform (DFT) vectors. The configuration information indicates the value of L and the value of S. The sequence number of a DFT vector of the DFT vectors is determined according to the value of S.

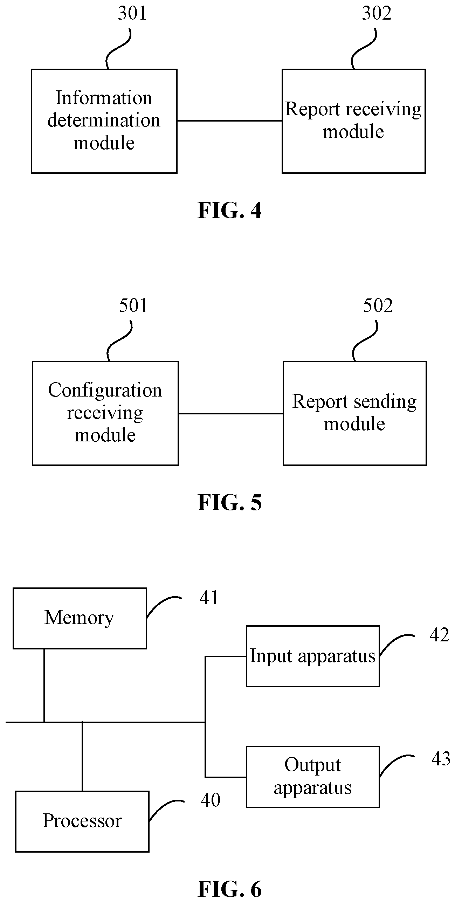

FIG. 4 is a diagram illustrating the structure of a channel state information transmission apparatus according to an embodiment of the present application. The apparatus may perform the method provided by any one embodiment of the present application and has functional modules and effects corresponding to the execution methods. The apparatus may be implemented by software and/or hardware. Referring to FIG. 4, the apparatus provided by this embodiment of the present application includes an information determination module 301 and a report receiving module 302.

The information determination module 301 is configured to determine configuration information and transmit the configuration information to a terminal. The configuration information includes at least one of a size of a subband, a channel state information reporting band, the number R of precoding matrix subbands contained in each subband, or report content of the channel state information.

The report receiving module 302 is configured to receive channel state information which is reported according to the configuration information by the terminal. The report content of the channel state information includes a precoding matrix indicator (PMI).

In this embodiment of the present application, the determined configuration information is transmitted to the terminal via the information determination module 301 so that the report receiving module 302 acquires the channel state information which is reported according to the configuration information by the terminal. The configuration information may include at least one of the size of a subband, a channel state information reporting band, the number R of precoding matrix subbands contained in each subband, or report content of the channel state information. The report content of the channel state information includes a precoding matrix indicator. The terminal is instructed through the configuration information to feed back channel state information so that the accuracy of the channel state information can be improved, utilization efficiency of the channel can be enhanced, and communication quality can be improved.

FIG. 5 is a diagram illustrating the structure of a channel state information transmission apparatus according to an embodiment of the present application. The apparatus may perform the method provided by any embodiment of the present application and has functional modules and effects corresponding to the execution methods. The apparatus may be implemented by software and/or hardware. Referring to FIG. 5, the apparatus provided by this embodiment of the present application includes a configuration receiving module 501 and a report sending module 502.

The configuration receiving module 501 is configured to receive configuration information sent by a base station. The configuration information is determined by the base station.

The report sending module 502 is configured to report, according to the configuration information, channel state information to the base station. The configuration information includes at least one of a size of a subband, a channel state information reporting band, the number R of precoding matrix subbands contained in each subband, or report content of the channel state information. The report content of the channel state information includes a precoding matrix indicator (PMI).

In this embodiment of the present application, the configuration receiving module 501 acquires the configuration information determined by the base station at the terminal, and the report sending module 502 reports the channel state information to the base station according to the configuration information. The configuration information may include at least one of the size of a subband, a channel state information reporting band, the number R of precoding matrix subbands contained in each subband, or report content of the channel state information. The report content of the channel state information includes a precoding matrix indicator. The terminal is instructed through the configuration information to feed back channel state information so that the accuracy of the channel state information can be improved, utilization efficiency of the channel can be enhanced, and communication quality can be improved.

On the basis of the preceding embodiment of the present application, the value of the number R of the precoding matrix subbands contained in the each subband in the apparatus is derived from a set of candidate values. Each element of multiple elements in the set of candidate values is a positive integer. The maximum value $R_{max}$ of the multiple elements in the set of candidate values is determined according to the channel state information reference signal (CSI-RS) density.

On the basis of the preceding embodiments of the present application, the maximum value $R_{max}$ of the multiple elements in the set of candidate values and density p of the channel state information reference signal (CSI-RS) in the apparatus have a positive proportional relationship. The value of the $R_{max}$ increases as the value of the p increases, and the value of the $R_{max}$ decreases as the value of the p decreases.

On the basis of the preceding embodiments of the present application, the maximum value $R_{max}$ of the multiple elements in the set of candidate values in the apparatus is determined according to the size of the subband.

On the basis of the preceding embodiments of the present application, the maximum value $R_{max}$ of the multiple

13

elements in the set of candidate values and the size of the subband in the apparatus have a positive proportional relationship. The value of the $R_{max}$ increases as the size of the subband increases, and the value of the $R_{max}$ decreases as the size of the subband decreases.

On the basis of the preceding embodiments of the present application, the maximum value $R_{max}$ of the multiple elements in the set of candidate values in the apparatus is jointly determined according to the size of the subband and the number of CSI-RS ports.

On the basis of the preceding embodiments of the present application, the maximum value $R_{max}$ of the multiple elements in the set of candidate values in the apparatus is jointly determined according to the size of the subband and the density p of the channel state information reference signal (CSI-RS).

On the basis of the preceding embodiments of the present application, the maximum value $R_{max}$ of the multiple elements in the set of candidate values in the apparatus is determined according to the product of the size of the subband and the density p of the channel state information reference signal (CSI-RS).

On the basis of the preceding embodiments of the present application, the p is 1, and correspondingly, the $R_{max}$ is the size of the subband; and the P is 0.5, and correspondingly, the $R_{max}$ is half the size of the subband.

On the basis of the preceding embodiments of the present application, the value of an element of the multiple elements in the set of candidate values is 2 to the power of i. i is an integer. The maximum value of i is determined by the size of the subband and the density p of the channel state information reference signal (CSI-RS).

On the basis of the preceding embodiments of the present application, the configuration information also includes the mapping relation of vectors of Q times the number M of CSI-RS ports mapped to a CSI-RS resource, where Q is a positive integer.

On the basis of the preceding embodiments of the present application, the value of Q is derived from a set of candidate values, and the maximum value of multiple elements in the set of candidate values is determined by the size of the subband.

On the basis of the preceding embodiments of the present application, the value of Q is derived from a set of candidate values in which each element of multiple elements is an integer power of 2.

On the basis of the preceding embodiments of the present application, mapping the vectors of the Q times the number M of the CSI-RS ports to the CSI-RS resource includes the steps described below. One subband of the multiple subbands is divided into Q groups and consecutive P resource blocks form one group. Q*M vectors are divided into Q vector groups and each vector group of the Q vector groups includes M vectors. A vector group of the Q vector groups is mapped to a resource block group of the Q groups in a one-to-one manner.

On the basis of the preceding embodiments of the present application, multiple sequence numbers of the Q*M vectors are in ascending order according to multiple resource block groups from low frequency to high frequency.

On the basis of the preceding embodiments of the present application, multiple resource block groups of a first subband of a bandwidth part are mapped, from high frequency to low frequency, to multiple vector groups in sequence in descending order from the largest sequence number of the multiple vector groups.

On the basis of the preceding embodiments of the present application, multiple resource block groups of a last subband of a bandwidth part are mapped, from low frequency to high frequency, to multiple vector groups in sequence in ascending order from a smallest sequence number of the multiple vector groups.

On the basis of the preceding embodiments of the present application, a resource block group of multiple resource block groups of a first subband of a bandwidth part is mapped to a vector group with a smallest sequence number of multiple vector groups.

On the basis of the preceding embodiments of the present application, mapping the vectors of the Q times the number M of the CSI-RS ports to the CSI-RS resource includes the steps described below. Multiple resource blocks in the channel state information reporting band are divided into Q groups. The sequence numbers of the multiple resource blocks in the channel state information reporting band are serially determined in ascending order from low frequency to high frequency. A sequence number of a resource block is denoted as k, a remainder of k divided by Q is denoted as k', and a resource block group to which the resource block belongs is determined according to the remainder k'. Q*M vectors are divided into Q groups. Each vector group of the Q groups includes M vectors. A vector group is mapped to a resource block group in a one-to-one manner.

On the basis of the preceding embodiments of the present application, sequence numbers of the Q*M vectors are in ascending order according to a remainder k' of the multiple resource blocks from low to high.

On the basis of the preceding embodiments of the present application, mapping the vectors of the Q times the number M of the CSI-RS ports to the CSI-RS resource includes the steps described below. Multiple resource blocks in the channel state information reporting band are divided into Q + K groups, where K is an integer greater than or equal to zero. The sequence number of a resource block group of the Q + K groups is denoted as u, and a remainder of u divided by Q is denoted as u'. Q*M vectors are divided into Q groups. Each vector group of the Q groups includes M vectors. Each vector group of the Q groups is mapped to a resource block group with a corresponding remainder of the Q + K groups in a manner in which a vector group corresponds to a remainder according to a remainder u' of a sequence number of a resource block group of the Q + K groups.

On the basis of the preceding embodiments of the present application, the precoding matrix indicator (PMI) includes L first vectors and S second vectors. The L first vectors represent a selection of a CSI-RS port or a selection of a vector mapped by a CSI-RS resource. The S second vectors are frequency domain vectors and DFT vectors. The configuration information indicates the value of L and the value of S. The sequence number of a DFT vector is determined according to the value of S.

On the basis of the preceding embodiments of the present application, the precoding matrix indicator (PMI) includes L first vectors and S second vectors. The L first vectors represent a selection of a CSI-RS port or a selection of a vector mapped by a CSI-RS resource. The S second vectors are frequency domain vectors and DFT vectors. The configuration information indicates the value of L. The value of S is determined according to L or the number of CSI-RS ports.

FIG. 6 is a diagram illustrating the structure of an electronic device according to an embodiment of the present application. As shown in FIG. 6, the electronic device includes a processor 40, a memory 41, an input apparatus 42, and an output apparatus 43. One or more processors 40 may be provided in the electronic device. One processor 40 is used as an example in FIG. 6. The processor 40, the memory 41, the input apparatus 42, and the output apparatus 43 may be connected through a bus or in other manners. In FIG. 6, connection through a bus is used as an example.

As a computer-readable storage medium, the memory 41 may be configured to store software programs, computer-executable programs, and modules, such as modules (an information determination module 301 and a report receiving module 302; or a configuration receiving module 501 and a report sending module 502) corresponding to the channel state information transmission apparatus in an embodiment of the present application. The processor 40 executes software programs, instructions, and modules stored in the memory 41 to perform function applications and data processing of the device, that is, to implement the channel state information transmission method.

The memory 41 may mainly include a program storage region and a data storage region. The program storage region may store an operating system and an application program required for at least one function. The data storage region may store data or the like created according to the use of the terminal. Additionally, the memory 41 may include a high-speed random-access memory and may also include a nonvolatile memory such as at least one disk memory, flash memory, or another nonvolatile solid-state memory. In some examples, the memory 41 may include memories that are remotely disposed relative to the processor 50, and these remote memories may be connected to the device via a network. Examples of the preceding network include, but are not limited to, the Internet, an intranet, a local area network, a mobile communication network, and a combination thereof.

The input apparatus 42 may be configured to receive inputted digital or character information and generate key signal input related to the user setting and function control of the device. The output apparatus 43 may include a display device such as a display screen.

Embodiments of the present application also provide a storage medium including computer-executable instructions. The computer-executable instructions, when executed by a computer processor, implement a channel state information transmission method. The method includes determining configuration information, transmitting the configuration information to a terminal, and receiving channel state information which is reported according to the configuration information by the terminal. The configuration information includes at least one of a size of a subband, a channel state information reporting band, the number R of precoding matrix subbands contained in each subband, or report content of the channel state information. The report content of the channel state information includes a precoding matrix indicator (PMI).

Alternatively, the method includes receiving configuration information sent by a base station, where the configuration information is determined by the base station, and reporting, according to the configuration information, channel state information to the base station. The configuration information includes at least one of a size of a subband, a channel state information reporting band, the number R of precoding matrix subbands contained in each subband, or report content of the channel state information. The report content of the channel state information includes a precoding matrix indicator (PMI).

As for the storage medium including the computer-executable instruction, which is provided in the embodiments of the present application, the computer-executable instruction may implement not only the operations in the preceding method but also the related operations in the channel state information transmission method provided in any embodiment of the present application.

From the preceding description of embodiments, it is apparent to those skilled in the art that the present application may be implemented by software plus necessary general-purpose hardware or may be implemented by hardware. The technical solutions of the present application may be essentially embodied in the form of a software product. The software product in a computer may be stored in a computer-readable storage medium such as a floppy disk, a read-only memory (ROM), a random-access memory (RAM), a flash memory, a hard disk, or an optical disc in the computer and includes several instructions for enabling a computer device (which may be a personal computer, a server, or a network device) to perform the methods of the embodiments of the present application.

Units and modules included in the embodiments of the apparatus are just divided according to functional logic. The present application is not limited to this division as long as the corresponding functions can be implemented. Additionally, the names of function units are just used to distinguish between each other and are not intended to limit the scope of the present application.

It is to be understood by those of ordinary skill in the art that some or all steps of the preceding methods and function modules/units in the preceding system or device may be implemented as software, firmware, hardware, and suitable combinations thereof.

In the hardware implementation, the division of the preceding function modules/units may not correspond to the division of physical components. For example, one physical component may have multiple functions, or one function or step may be performed jointly by several physical components. Some or all physical components may be implemented as software executed by a processor, such as a central processing unit, a digital signal processor, or a microprocessor, may be implemented as hardware, or may be implemented as integrated circuits, such as application-specific integrated circuits. Such software may be distributed on computer-readable media. The computer-readable media may include computer storage media (or non-transitory media) and communication media (or transitory media). As known to those of ordinary skill in the art, the term computer storage media includes volatile and non-volatile as well as removable and non-removable media implemented in any method or technology for storing information (such as computer-readable instructions, data structures, program modules, or other data). The computer storage media include, but are not limited to, a RAM, a ROM, an electrically erasable programmable read-only memory (EEPROM), a flash memory, or other memory technologies, a compact disc read-only memory (CD-ROM), a digital video disc (DVD) or other optical disc memories, magnetic cassettes, magnetic tapes, magnetic disk memories or other magnetic storage apparatuses, or any other medium used for storing the desired information and accessible by a computer. Moreover, as known to those of ordinary skill in the art, the communication media generally include computer-readable instructions, data structures, program modules, or other data in a modulated data signal such as a carrier wave or other transport mechanism and may include any information delivery medium.

**Claims**

1. A channel state information transmission method, comprising:

   determining configuration information, and transmitting the configuration information to a terminal; and
   receiving channel state information which is reported according to the configuration information by the terminal;
   wherein the configuration information comprises at least one of a size of a subband, a channel state information reporting band, a number R of precoding matrix subbands contained in each subband of a plurality of subbands, or report content of the channel state information; wherein the report content of the channel state information comprises a precoding matrix indicator (PMI).

2. The method of claim 1, wherein a value of the number R of the precoding matrix subbands contained in the each subband is derived from a set of candidate values, each element of a plurality of elements in the set of candidate values is a positive integer, and a maximum value $R_{max}$ of the plurality of elements in the set of candidate values is determined according to channel state information reference signal (CSI-RS) density.

3. The method of claim 2, wherein the maximum value $R_{max}$ of the plurality of elements in the set of candidate values and the CSI-RS density denoted as p have a positive proportional relationship, wherein a value of the $R_{max}$ increases as a value of the p increases, and the value of the $R_{max}$ decreases as the value of the p decreases.

4. The method of claim 2, wherein the maximum value $R_{max}$ of the plurality of elements in the set of candidate values is determined according to the size of the subband.

5. The method of claim 4, wherein the maximum value $R_{max}$ of the plurality of elements in the set of candidate values and the size of the subband have a positive proportional relationship, wherein a value of the $R_{max}$ increases as the size of the subband increases, and the value of the $R_{max}$ decreases as the size of the subband decreases.

6. The method of claim 2, wherein the maximum value $R_{max}$ of the plurality of elements in the set of candidate values is jointly determined according to the size of the subband and a number of CSI-RS ports.

7. The method of claim 2, wherein the maximum value $R_{max}$ of the plurality of elements in the set of candidate values is jointly determined according to the size of the subband and density p of the CSI-RS.

8. The method of claim 7, wherein the maximum value $R_{max}$ of the plurality of elements in the set of candidate values is determined according to a product of the size of the subband and the density p of the CSI-RS.

9. The method of claim 7, wherein the p is 1, and the $R_{max}$ is the size of the subband; or the P is 0.5, and the $R_{max}$ is half the size of the subband.

10. The method of claim 2, wherein a value of the each element of the plurality of elements in the set of candidate values is 2 to the power of i, wherein i is an integer, and a maximum value of i is determined by the size of the subband and density p of the CSI-RS.

11. The method of claim 1, wherein the configuration information further comprises a mapping relation from vectors of Q times a number M of CSI-RS ports to a CSI-RS resource, wherein Q is a positive integer.

12. The method of claim 11, wherein a value of Q is derived from a set of candidate values, and a maximum value of a plurality of elements in the set of candidate values is determined by the size of the subband.

13. The method of claim 11, wherein a value of Q is derived from a set of candidate values in which each element of a plurality of elements is an integer power of 2.

14. The method of claim 11, wherein mapping the vectors of the Q times the number M of the CSI-RS ports to the CSI-RS resource comprises: dividing one subband of the plurality of subbands into Q resource block groups, wherein consecutive P resource blocks form one group; dividing Q*M vectors into Q vector groups, wherein each vector group of the Q vector groups comprises M vectors; and mapping a vector group of the Q vector groups to a resource block group of the Q resource block groups in a one-to-one manner.

15. The method of claim 14, wherein a plurality of sequence numbers of the Q*M vectors are in ascending order according to a plurality of resource block groups from low frequency to high frequency.

16. The method of claim 15, wherein a plurality of resource block groups of a first subband of a bandwidth part are mapped, from high frequency to low frequency, to a plurality of vector groups in sequence in descending order from a largest sequence number of the plurality of vector groups.

17. The method of claim 15, wherein a plurality of resource block groups of a last subband of a bandwidth part are mapped, from low frequency to high frequency, to a plurality of vector groups in sequence in ascending order from a smallest sequence number of the plurality of vector groups.

18. The method of claim 15, wherein a resource block group of a plurality of resource block groups of a first subband of a bandwidth part is mapped to a vector group with a smallest sequence number of a plurality of vector groups.

19. The method of claim 11, wherein mapping the vectors of the Q times the number M of the CSI-RS ports to the CSI-RS resource comprises: dividing a plurality of resource blocks in the channel state information reporting band into Q groups, wherein sequence numbers of the plurality of resource blocks in the channel state information reporting band are serially determined in ascending order from low frequency to high frequency; denoting a sequence number of a resource block of the plurality of resource blocks as k, denoting a remainder of k divided by Q as k', and determining a resource block group of the plurality of resource block groups to which the resource block belongs according to the remainder k'; dividing Q*M vectors into Q groups, wherein each vector group of the Q groups comprises M vectors; and mapping a vector group of the Q groups to a resource block group of the Q resource block groups in a one-to-one manner.

20. The method of claim 19, wherein sequence numbers of the Q*M vectors are in ascending order according to remainders k' of the plurality of resource blocks from low to high.

21. The method of claim 11, wherein mapping the vectors of the Q times the number M of the CSI-RS ports to the CSI-RS resource comprises: dividing a plurality of resource blocks in the channel state information reporting band into Q + K resource block groups, wherein K is an integer greater than or equal to zero; denoting a sequence number of a resource block group of the Q + K resource block groups as u, and denoting a remainder of u divided by Q as u'; dividing Q*M vectors into Q vector groups, wherein each vector group of the Q vector groups comprises M vectors; and mapping each vector group of the Q vector groups to a resource block group with a corresponding remainder of the Q + K resource block groups in a manner in which a vector group of the Q groups corresponds to a remainder of a plurality of reminders according to the remainder u' of the sequence number of the resource block group of the Q + K resource block groups.

22. The method of claim 1, wherein the PMI comprises L first vectors and S second vectors; wherein the L first vectors represent a selection of a CSI-RS port or a selection of a vector mapped by a CSI-RS resource; the S second vectors are frequency domain vectors and discrete Fourier transform (DFT) vectors; the configuration information indicates a value of L and a value of S; and a sequence number of a DFT vector of the DFT vectors is determined according to the value of S.

23. The method of claim 1, wherein the PMI comprises L first vectors and S second vectors; wherein the L first vectors represent a selection of a CSI-RS port or a selection of a vector mapped by a CSI-RS resource; the S second vectors are frequency domain vectors and DFT vectors; the configuration information indicates a value of L; and a value of S is determined according to L or a number of CSI-RS ports.

24. A channel state information transmission method, comprising:

receiving configuration information sent by a base station, wherein the configuration information is determined by the base station; and
reporting, according to the configuration information, channel state information to the base station;
wherein the configuration information comprises at least one of a size of a subband, a channel state information reporting band, a number R of precoding matrix subbands contained in each subband of a plurality of subbands, or report content of the channel state information; wherein the report content of the channel state information comprises a precoding matrix indicator (PMI).

25. A channel state information transmission apparatus, comprising:

an information determination module, which is configured to determine configuration information and transmit the configuration information to a terminal, wherein the configuration information comprises at least one of a size of a subband, a channel state information reporting band, a number R of precoding matrix subbands contained in each subband of a plurality of subbands, or report content of the channel state information; and
a report receiving module, which is configured to receive channel state information which is reported according to the configuration information by the terminal, wherein the report content of the channel state information comprises a precoding matrix indicator (PMI).

26. A channel state information transmission apparatus, comprising:

a configuration receiving module, which is configured to receive configuration information sent by a base station, wherein the configuration information is determined by the base station; and
a report sending module, which is configured to report, according to the configuration information, channel state information to the base station;
wherein the configuration information comprises at least one of a size of a subband, a channel state information reporting band, a number R of precoding matrix subbands contained in each subband of a plurality of subbands, or report content of the channel state information; wherein the report content of the channel state information comprises a precoding matrix indicator (PMI).

27. An electronic device, comprising:

at least one processor; and
a memory configured to store at least one program,
wherein when executed by the at least one processor, the at least one program causes the at least one processor to perform the channel state information transmission method of any one of claims 1 to 24.

28. A computer-readable storage medium, which is configured to store a computer program which, when executed by a processor, implements the channel state information transmission method of any one of claims 1 to 24.

Determine configuration information and transmit the configuration information to a terminal ~110

Receive channel state information which is reported according to the configuration information by the terminal ~120

**FIG. 1**

| Base station | | | Terminal |

Determine configuration information

——Send the configuration information——▶

◀——Channel state information report——

**FIG. 2**

Receive configuration information sent by a base station and the configuration information is determined by the base station ~210

Report channel state information to the base station according to the configuration information ~220

**FIG. 3**

301

302

Information
determination
module

Report receiving
module

**FIG. 4**

501

502

Configuration
receiving
module

Report sending
module

**FIG. 5**

Memory 41

Input apparatus 42

40

Output
apparatus 43

Processor 40

**FIG. 6**

## INTERNATIONAL SEARCH REPORT

| International application No. |
| --- |
| **PCT/CN2021/141203** |

**A. CLASSIFICATION OF SUBJECT MATTER**

H04B 7/0456(2017.01)i; H04B 7/06(2006.01)i

According to International Patent Classification (IPC) or to both national classification and IPC

**B. FIELDS SEARCHED**

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNTXT; WPABSC; ENTXTC; VCN; VEN; 3GPP: 信道状态信息, 参考信号, 配置, 报告, 上报, 子带, 尺寸, 大小, 频带, 预编码矩阵, 指示符, 数目, 数量, 个数, 集合, 密度, 端口, 映射, 组, 矢量, 向量, 傅立叶变换, CSI, CSI-RS, configure, report, subband, size, band, PMI, number, set, density, port, map, group, vector, DFT

**C. DOCUMENTS CONSIDERED TO BE RELEVANT**

| Category* | Citation of document, with indication, where appropriate, of the relevant passages | Relevant to claim No. |
| --- | --- | --- |
| PX | CN 112865843 A (ZTE CORPORATION) 28 May 2021 (2021-05-28) description paragraphs [0028]-[0187] | 1-28 |
| X | SAMSUNG. "Feature lead summary for [100e-NR-eMIMO-MUCSI-01]" *3GPP TSG RAN WG1#100-e R1-2001215,* 29 February 2020 (2020-02-29), section 1 | 1, 24-28 |
| Y | SAMSUNG. "Feature lead summary for [100e-NR-eMIMO-MUCSI-01]" *3GPP TSG RAN WG1#100-e R1-2001215,* 29 February 2020 (2020-02-29), section 1 | 2-23 |
| Y | HUAWEI et al. "Summary of CSI enhancements for MTRP and FDD" *3GPP TSG RAN WG1 Meeting #103-e R1-2009529,* 05 November 2020 (2020-11-05), sections 2.2.1, 2.2.2, Appendix | 2-23 |
| X | WO 2020150884 A1 (QUALCOMM INCORPORATED et al.) 30 July 2020 (2020-07-30) description, paragraphs [0035]-[0119] | 1, 24-28 |
| X | CN 108601084 A (HUAWEI TECHNOLOGIES CO., LTD.) 28 September 2018 (2018-09-28) description paragraphs [0007]-[0152] | 1, 24-28 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 February 2022** | **08 March 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/141203**

C. DOCUMENTS CONSIDERED TO BE RELEVANT

| Category* | Citation of document, with indication, where appropriate, of the relevant passages | Relevant to claim No. |
|---|---|---|
| A | CN 109757127 A (LG ELECTRONICS INC.) 14 May 2019 (2019-05-14) entire document | 1-28 |

**INTERNATIONAL SEARCH REPORT**
Information on patent family members

International application No.

**PCT/CN2021/141203**

| Patent document cited in search report | | | Publication date (day/month/year) | Patent family member(s) | | | Publication date (day/month/year) |
|---|---|---|---|---|---|---|---|
| CN | 112865843 | A | 28 May 2021 | None | | | |
| WO | 2020150884 | A1 | 30 July 2020 | EP | 3915196 | A1 | 01 December 2021 |
| | | | | WO | 2020151734 | A1 | 30 July 2020 |
| | | | | CN | 113348630 | A | 03 September 2021 |
| CN | 108601084 | A | 28 September 2018 | CA | 3045400 | A1 | 12 July 2019 |
| | | | | US | 2020099473 | A1 | 26 March 2020 |
| | | | | US | 11239950 | B2 | 01 February 2022 |
| | | | | CN | 109041231 | A | 18 December 2018 |
| | | | | JP | 2020507225 | A | 05 March 2020 |
| | | | | JP | 6977920 | B2 | 08 December 2021 |
| | | | | WO | 2019136934 | A1 | 18 July 2019 |
| | | | | CN | 110035530 | A | 19 July 2019 |
| | | | | EP | 3537813 | A1 | 11 September 2019 |
| | | | | EP | 3537813 | A4 | 08 January 2020 |
| | | | | EP | 3537813 | B1 | 12 January 2022 |
| | | | | CN | 110291826 | A | 27 September 2019 |
| | | | | CN | 110430615 | A | 08 November 2019 |
| | | | | BR | 112019015450 | A2 | 24 March 2020 |
| | | | | US | 2019222354 | A1 | 18 July 2019 |
| | | | | US | 10511411 | B2 | 17 December 2019 |
| | | | | CN | 108601084 | B | 19 April 2019 |
| CN | 109757127 | A | 14 May 2019 | KR | 20190028351 | A | 18 March 2019 |
| | | | | KR | 102107705 | B1 | 07 May 2020 |
| | | | | US | 2020403679 | A1 | 24 December 2020 |
| | | | | JP | 2020150558 | A | 17 September 2020 |
| | | | | JP | 6926281 | B2 | 25 August 2021 |
| | | | | KR | 20200049741 | A | 08 May 2020 |
| | | | | KR | 102140705 | B1 | 04 August 2020 |
| | | | | WO | 2019050159 | A1 | 14 March 2019 |
| | | | | US | 2019081678 | A1 | 14 March 2019 |
| | | | | US | 10812164 | B2 | 20 October 2020 |
| | | | | JP | 2019532553 | A | 07 November 2019 |
| | | | | JP | 6714151 | B2 | 24 June 2020 |
| | | | | EP | 3480970 | A1 | 08 May 2019 |
| | | | | EP | 3480970 | A4 | 04 March 2020 |
| | | | | EP | 3480970 | B1 | 05 May 2021 |
| | | | | IN | 201927035644 | A | 28 February 2020 |

Form PCT/ISA/210 (patent family annex) (January 2015)